# EUROPEAN PATENT SPECIFICATION

(11) **EP 3 907 423 B1**
(45) Date of publication and mention of the grant of the patent: **20.07.2022**
(21) Application number: 20173261.7
(22) Date of filing: 06.05.2020
(51) Int. Cl.: F16L 53/32

(54) **USE OF A FLEXIBLE STRUCTURE FOR TRANSFERRING HEAT**
VERWENDUNG EINER FLEXIBLEN STRUKTUR ZUR ÜBERTRAGUNG VON WÄRME
UTILISATION D'UNE STRUCTURE FLEXIBLE POUR TRANSFÉRER DE LA CHALEUR

(43) Date of publication of application: 10.11.2021
(73) Proprietor: WWV Wärmeverwertung GmbH & Co. KG, 63477 Maintal (DE)
(72) Inventor: Freudenberger, Maximilian Jörg, 01307 Dresden (DE); Grahamer, Stefan, 63477 Maintal (DE); Kreuzhuber, Christian, 63477 Maintal (DE)
(74) Representative: Fuchs Patentanwälte Partnerschaft mbB

(56) References cited:
- EP-A1- 2 607 534
- WO-A1-00/04085
- DE-A1-102010 002 434
- DE-A1-102015 210 486
- US-A- 3 972 821
- US-B1- 6 482 520
- US-B2- 10 471 677

## Description

### Field of the invention

The present invention relates to use of a flexible structure for transferring heat from a heating device to an object to be heated, in a trace heating system. More precisely, the present invention relates to use of a flexible structure for controlling heat transfer between a heating device and an object to be heated, in particular in a trace heating system. The invention further relates to a flexible structure for transferring heat and/or controlling heat transfer between a heating device and an object to be heated as well as to a trace heating system and a method of heating an object to be heated by a heating device and/or controlling heat transfer between a heating device and an object to be heated.

### Background of the invention

A prior art heat transfer system including heat transfer between a heating device (so called tracing device) and an object to be heated (so called traced object) is the so-called trace heating system. Such trace heating systems are particularly known from industrial pipe heating applications, for example provided in refineries.

In these and other applications trace heating systems can be used to compensate for heat losses of pipelines, fittings, containers, reservoirs and other auxiliary equipment when a thermal insulation is insufficient. In particular, trace heating systems can be provided for compensating for heat losses of highly viscous substances, such as bitumen, contained in pipelines, fittings, containers, reservoirs and other auxiliary equipment, in order to maintain a sufficient fluidity of the substances for allowing transportation of the substance.

Three different sorts of trace heating systems are available in the industry, depending on their field of application, namely distance trace heating systems, contact trace heating systems and trace heating systems with reinforced conduction which use a heat transfer compound. They differ from each other by the method of heat transfer. Heat can be transferred by three different methods, namely conduction, convection and radiation.

Conduction describes the heat transfer occurring on molecular level. It occurs in every substance independent of its state of aggregation and is driven by the temperature difference between two substances. It occurs when the heating device and the object to be heated are in direct contact with each other. Conduction is the main heat transferring method in trace heating systems using a heat transfer compound for reinforced conduction. It also acts as heat transfer method, up to a certain extent, in contact trace heating systems.

Convection describes the heat transfer occurring by a density difference between two fluids with different temperatures.

Radiation describes the heat transfer due to electromagnetic waves. It is transferred by waves with different wavelengths and frequencies. Convection and radiation are the predominant methods of heat transfer in distance trace heating systems.

One common type of distance trace heating systems uses small stainless steel spacer profiles which are located between the heating device (tracing device) and the object to be heated (traced object). This trace heating system arrangement creates an air gap between the tracing device and the traced object, thus resulting in a reduced heat flow to the traced object. For example, such trace heating systems are used for tracing of temperature sensitive media.

In trace heating systems with reinforced conduction that use a heat transfer compound for transferring heat, the heat transfer compound enlarges the surface contact area between the heating device and the object to be heated. This results in an enhancement of the heat transfer in such trace heating systems. Typically the heat transfer compound is a heat transfer cement. The heat transfer cement, in an initially moldable state, is arranged between the heating device and the object to be heated thus bridging the gap there between. After positioning the heat transfer cement, it is cured to a solid state under heat treatment. Under operating conditions, the heat transfer compound remains in solid state.

Document US 3,972,821 A discloses a heat transfer composition, consisting essentially of an epoxy resin, a high temperature curing agent therefor, nitrile rubber, polybutene, particulate heat transfer coefficient-increasing filler and a cold flow control agent such as asbestos.

Further, document WO 00/04085 A1 discloses a heat transfer material comprised of a polymeric material and a nitride or oxide that is thermally conductive, but electrically non-conductive.

However, such prior art trace heating systems often have an insufficient heat transfer efficiency due to air pockets formed in the heat transfer compound and gaps between the heat transfer compound and the adjacent heating device and object to be heated, which occur after curing of the heat transfer cement. More precisely, over time the heat transfer compound often gets brittle due to vibrations or thermal movement of the tracing device. This can lead to the formation of air gaps, which reduces the heat transfer from the heating device to the object to be heated, and thus lowers the heat transfer coefficient from the heating device to the surface of the object to be heated.

Further, vapor bubbles can unintentionally form during the curing process of the heat transfer compound. Such possible vapor bubbles formation risks that these vapor bubbles explode and thus cause a potential damage of the inner structure of the heat transfer compound, which reduces the heat transfer coefficient from the heating device to the surface of the object to be heated.

Further drawbacks of such prior art trace heating systems with reinforced conduction relate to the difficult handling of the heat transfer compound in order to achieve the intended arrangement and best possible bridging between the pipes.

Due to the viscous fluidic structure of the heat transfer compound under assembling conditions, the viscous heat transfer compound can easily drop off the assembling equipment. This results in a higher consumption of the heat transfer compound as well as in a risk for the workwear of getting contaminated due to the toxicity of the heat transfer compound. Heat transfer compound can cause contact hazards for skin and eyes as well as symptoms of poisoning due to its acute oral toxicity. Thus, workwear with special protection properties must be worn.

Further, due to the viscous fluidic structure of the heat transfer compound, additional assembling tools like mounting plates or trowels are necessary for applying the heat transfer compound.

Another drawback of the heat transfer compound is its water solubility and susceptibility to frost. When assembling the heat transfer compound on the tracing device, dry weather conditions must prevail or, in the case of rainy weather conditions, an assembly tent must be installed, or any other action for ensuring dry working conditions must be taken. Due to the susceptibility to frost, it must be ensured that the assembling temperature is above the freezing point (0° C).

### Object of the invention

It is an object of the present invention to provide a solution for overcoming at least some of the above drawbacks.

In particular, it is an object of the present invention to provide a structure for optimally transferring heat that is easily installable in a trace heating system.

These objects are achieved by the subject matter of the independent claims. Preferred embodiments and preferred features are specified in the dependent claims and the following description.

### Summary of the invention

According to a first aspect, the present invention relates to use of a flexible structure comprising expanded graphite for transferring heat from a heating device to an object to be heated in a trace heating system. In other words, the flexible structure can also be described as a heat transfer element. In particular, the flexible structure comprising expanded graphite can be used for transferring heat from a heating device to an object to be heated in a trace heating system. More precisely, the present invention relates to use of a flexible structure comprising expanded graphite for controllably transferring heat from a heating device to an object to be heated or in other words for controlling heat transfer from a heating device to an object to be heated.

The heating device can also be described as a tracing device. The object to be heated can also be described as a traced object.

Flexible in the sense of this disclosure can mean that the flexible structure is easily reversibly deformable by an external force and can thus be adjusted to a plurality of shapes, in particular to the shape of a component adjacent to the flexible structure, i.e. to components from which and/or to which heat is to be transferred via the flexible structure. The flexible structure can be deformable by a contact force (contact pressure) occurring between the heating device and the object to be heated in an assembled state of the heating system. This contact force (contact pressure) can be caused by fastening means, e.g. tensioning straps, used for firmly attaching the components of the trace heating system together.

By using the flexible structure as a heat transfer element for transferring heat from a heating device to an object to be heated, an optimum contact surface between the flexible structure and the heating device containing a heat carrier and/or the object to be heated containing a substance is achieved. This can be realized as the flexible structure can be precisely and adjusta-bly abutted to the heating device contour and/or the object contour. Further, by means of its flexibility, the flexible structure can compensate for thermal expansion and/or contraction of a heating device containing the heat carrier and can thus reliably maintain its function during the heat transfer process.

The flexible structure can have a flat and elongated shape. Thus, the flexible structure can be provided between the heating device and the object to be heated, wherein a first side surface of the flexible structure can abut the heating device and an opposite second side surface of the flexible structure can abut the object to be heated. The flexible structure can be supplied in coils for an easy assembling of the flexible structure in a trace heating system, in particular by rolling out the flexible structure from the coil so that the first side surface is laid along a substantially linear heating device and the second side surface can rest on the object to be heated.

The material composition of the flexible structure, in particular the amount of expanded graphite, can be variable. By variation of the material composition of the flexible structure, in particular by choosing the amount of expanded graphite comprised in the flexible structure, the heat transfer coefficient from the heating device to the object to be heated can be selectively adapted with regard to the requirements of the application or system in which the flexible structure is used for controllably transferring heat. Thus, by variation of the material composition of the flexible structure it can be influenced whether much or little heat is transferred from the heating device to the object to be heated.

Moreover, as the flexible structure does not cure, under operating conditions, unlike heat transfer compound, it is easy to assemble and easy to disassemble without residue, independent of any ambient conditions.

By means of the flexible structure arranged between the heating device and the object to be heated, the present invention combines two types of trace heating systems, namely a distance trace heating system and a trace heating system with reinforced conduction, but overcomes drawbacks of both systems as known from the prior art.

Expanded graphite, also described as expandable or exfoliated graphite, is a graphite having intercalated layers, which means that atoms or small molecules of an intercalation agent have been introduced between the carbon lattice layers of the graphite (intercalation). For example, sulphur or nitrogen compounds can serve as intercalation agents. Expanded graphite experiences a large increase in volume when heated to a temperature above the so-called onset temperature, which can be at least 150 °C, preferably at least 160 °C, more preferably at least 200 °C. The large increase in volume is caused by a decomposition of the intercalation agent, intercalated in the layer structure of the graphite, by the rapid heating to the onset temperature with formation of gaseous materials. As a result the graphite particles are expanded perpendicularly to the plane of the layers, wherein the expansion factor can be more than 200. Expanded graphite has a very low bulk density and a significantly higher surface area compared to graphite in its conventional form.

The expanded graphite can maintain its properties over a temperature range between - 200 °C and + 500 °C, thus providing a wide range of applications for the flexible structure used for heat transfer. In particular, over the temperature range between - 200 °C and + 500 °C, the expanded graphite can be dimensionally stable, can maintain its shape and structure, can maintain its flexibility and/or can maintain its properties for realizing a heat transfer coefficient from the heating device to the object to be heated of at least 80 W/(m² K), preferably at least 90 W/(m² K), more preferably at least 100 W/(m² K). Dimensionally stable can mean that the flexible structure does not expand more than 20 %, preferably not more than 15 %, more preferably not more than 5 %, still more preferably not more than 1 %, over the temperature range between - 200 °C and + 500 °C.

The expanded graphite can consist to at least 95 wt% of graphite, preferably to at least 97 wt%, more preferably to at least 99,5 wt%. The expanded graphite can have a chlorine content of less than 50 ppm, preferably less than 30 ppm, more preferably less than 15 ppm. The expanded graphite can comprise less than 0.5 % sulphur, preferably less than 0.25 %, more preferably less than 0.1 %. The expanded graphite can be usable in a pH range between 0 and 14. The expanded graphite can withstand a static pressure of at least 5 MPa, preferably at least 10 MPa, more preferably at least 20 MPa.

In particular, the expanded graphite extends, preferably continuously, along a longitudinal axis of the flexible structure, i.e. in an axial direction of the flexible structure.

The expanded graphite is flexible, with other words deformable, and therefore contributes to the flexibility (deformability) of the flexible structure and allows configuration of the flexible structure.

The flexible structure can be used to realize a heat transfer coefficient from the heating device to the object to be heated of at least 80 W/(m² K), preferably at least 90 W/(m² K), more preferably at least 100 W/(m² K). This heat transfer coefficient can be realized by means of a high amount/content of expanded graphite provided in the flexible structure. Here, the heat transfer coefficient can relate to the area and temperature of a surface portion of the heating device that is in contact with the flexible structure and the area and temperature of a surface portion of the object to be heated that is in contact with the flexible structure.

The flexible structure can further comprise a glass textile structure, preferably comprising glass silk. The glass textile structure can be woven or non-woven. The glass textile structure can for example comprise a fabric, a braid or a felt. In other words, the glass textile structure can be provided at least partly in form of a fabric, a braid or a felt. The glass textile structure can extend, preferably continuously, along a longitudinal axis of the flexible structure, i.e. in an axial direction of the flexible structure.

The glass textile structure can be flexible and therefore contribute to the flexibility of and allow configuration of the flexible structure.

The flexible structure can be used to realize a heat transfer coefficient from the heating device to the object to be heated of 30 W/(m² K) or less, preferably 20 W/(m² K) or less, more preferably 10 W/(m² K) or less. This heat transfer coefficient can be realized by means of a high amount/content of glass textile structure provided in the flexible structure. Here, the heat transfer coefficient can relate to the area and temperature of a surface portion of the heating device that is in contact with the flexible structure and the area and temperature of a surface portion of the object to be heated that is in contact with the flexible structure

By combining extendable graphite and a glass textile structure for forming the flexible structure, in particular by choosing the amounts, contents and ratios of the two materials, the flexibility and/or the achievable heat transfer coefficient from the heating device to the object to be heated of the flexible structure can be adjusted with regard to the intended use and the respective requirements. By providing a flexible structure having a high content of expanded graphite, a high heat transfer coefficient from the heating device to the object to be heated can be realized. By providing a high content of glass textile structure, the heat transfer coefficient from the heating device to the object to be heated can be reduced.

In an embodiment, the heating device can preferably be a cylindrical heating device. For example, the heating device can be a pipe, a corrugated hose or any other preferably cylindrical device, independent of its material composition.

The heating device can contain or run a heat carrier. The heat carrier can have a temperature of at least 50 °C, preferably at least 100 °C, more preferably at least 150 °C, still more preferably at least 200 °C. In particular, the heat carrier can have a temperature between 150 °C and 200 °C.

The heat carrier contained in the heating device can be a fluid, independent of its state of aggregation, an electric wire or any other heat providing material. Preferably, the heat carrier can be a fluid comprising heated steam, heated oil and/or heated water.

Independent of its material quality and composition, the object to be heated can be a pipe, a vessel, a tank, a valve, a pump, a container, a pipe fitting, an instrument, and/or any other object comprising heat absorbing material.

The object to be heated can contain or run a substance. The substance can be a fluid, independent of its state of aggregation, a solid material or any other heat absorbing material. Preferably, the substance to be heated can be a fluidic substance comprising bitumen. Fluidic in the sense of this description can mean that the substance has a viscosity of at least 0.25 mPas, preferably at least 0.5 mPas, more preferably at least 1 mPas, and/or that the substance has a viscosity of 220000 mPas or less, preferably 70000 mPas or less, more preferably 10000 mPas or less. The viscosity of the fluidic substance can be between 0.25 mPas and 220000 mPas, preferably between 0.5 mPas and 70000 mPas, more preferably between 1 mPas and 10000 mPas. All viscosity values specified herein can relate to viscosities of the substances at 23°C and can be measured according to ISO 3219:1993, for example with Brookfield RST CC touch rheometer.

In an embodiment, the heat carrier can be a heated fluid, preferably being provided in a heating pipe. In addition or alternatively, a substance of which a heat loss is to be minimized by means of the heat tracing system can be provided in a corresponding pipe to be heated. Thus, the flexible structure can be used for controllably transferring heat from a heating pipe (heated pipe) to a pipe to be heated. The pipe to be heated and/or the heating pipe can be a steel pipe, in particular a precision steel pipe.

The temperature of the heating device (a surface of the heating device) can be higher than the temperature of the object to be heated (of a surface of the object to be heated) and higher than the temperature of the substance contained in the object.

The flexible structure used for the heat transfer can optionally be a flexible structure comprising one or more features of the flexible structure described hereinafter.

According to another aspect, the present invention provides a flexible structure for transferring heat between a heating device and an object to be heated, preferably for controllably transferring heat or for controlling heat transfer. The flexible structure can also be described as a heat transfer element. The flexible structure has a longitudinal shape with a longitudinal axis and comprises an expanded graphite structure which forms at least a portion of a surface area of the flexible structure

The flexible structure or heat transfer element can be installable in a trace heating system and can be arrangeable between the heating device accommodating a heat carrier and the object to be heated accommodating a substance. Preferably, by means of the heating device a heat loss of the substance contained in the object to be heated can be controlled.

The above features and parameters described above in regard to the use of the flexible structure can accordingly apply for embodiments of the flexible structure.

The flexible structure can comprise a first surface area portion which is provided with a first recess configured to receive a portion of the heating device, such as a heat carrier pipe, containing the heat carrier. Preferably, the first recess can form a first concave section configured to receive the portion of the heating device. The first recess can be pre-formed or pre-shaped by cutting, milling, punching or pressing the flexible structure. In particular, as the flexible structure is flexible or deformable, the first recess can be pressed into the flexible structure by the heating device, in an assembled state.

The first concave section formed by the first recess can define an arc of a circle having a radius between 3 mm and 50 mm, preferably between 10 mm and 30 mm, more preferably between 21 mm and 27 mm. The circle can have a radius of at least 3 mm, preferably at least 5 mm, more preferably at least 10 mm, still more preferably at least 21 mm. The circle can have a radius of 50 mm or less, preferably of 30 mm or less, more preferably of 27 mm or less.

The flexible structure can comprise a second surface area portion which is provided with a second recess configured to receive a portion of the object to be heated, such as a pipe to be heated, containing the substance. Preferably, the second recess can form a second concave section configured to receive the portion of the object to be heated. The second recess can be pre-formed or pre-shaped by cutting, milling, punching or pressing the flexible structure. In particular, as the flexible structure is flexible or deformable, the second recess can be pressed into the flexible structure by the object to be heated, in an assembled state.

The second concave section formed by the second recess can define an arc of a circle having a radius of at least 25 mm, preferably at least 30 mm, more preferably at least 33 mm.

Pressing the flexible structure into a concave shape leads to a thinning of the flexible structure and thus to an enhancement of the heat transfer coefficient from the heating device to the object to be heated.

The flexible structure can comprise only the first recess in an embodiment. In this embodiment, the flexible structure can be arranged between a cylindrical heating device and a non-cylindrical object to be heated.

The flexible structure can comprise only the second recess in an embodiment. In this embodiment, the flexible structure can be arranged between a non-cylindrical heating device and a cylindrical object to be heated.

The flexible structure can comprise both the first recess and the second recess in an embodiment. In this embodiment, the flexible structure can be arranged between a cylindrical heating device and a cylindrical object to be heated.

The first surface area portion and the second area portion are preferably arranged on opposite sides of the heat transfer element. Thus, in the embodiment in which the flexible structure comprises the first recess and the second recess, the recesses can be provided on opposite sides of the flexible structure. Such a flexible structure can be provided for controlling heat transfer between a cylindrical heating device and a cylindrical object to be heated. In this embodiment, the two (first and second) recesses can be pressed into the flexible structure in opposite directions, e.g. the first recess can be pressed into a topside of the flexible structure and the second recess can be pressed into an underside of the flexible structure. Preferably, both recesses can each define an arc of a circle having a radius greater than 3mm. The two recesses can form two opposite concave sections, one in the topside and the other one in the underside of the flexible structure. Pressing the flexible structure into a concave shape leads to a thinning of the flexible structure and thus to an enhancement of the heat transfer coefficient cylindrical tracing device to the surface of the traced object.

When in use, i.e. in an operational state, the flexible structure can have a substantially rectangular or oval cross sectional area having a maximum width between 10 mm and 30 mm, preferably between 15 mm and 25 mm, more preferably between 17.5 mm and 22.5 mm, still more preferably between 20 mm and 22 mm. When in use, i.e. in an operational state, the flexible structure can have a maximum height between 2 mm and 12 mm, preferably between 4 mm and 10 mm, more preferably 5 mm and 7 mm. The height can be less than 12 mm, preferably less than 10 mm, more preferably less than 7 mm. By means of such small dimensions of the flexible structure, in particular the relatively small height, the distance between a heat carrier (or a heated pipe) and a substance to be heated (or a pipe to be heated) can be minimized, which can improve the heat transfer efficiency if needed in a respective application.

In an embodiment of the flexible structure the expanded graphite structure can be a woven or non-woven textile or fabric, preferably a braided structure.

In an embodiment of the flexible structure the expanded graphite structure can have a substantially tubular shape. The tubular shape can for example be pressed to a ribbon shape prior to use of the flexible structure.

The flexible structure can consist to at least 80 wt% of expanded graphite, preferably at least 90 wt%, more preferably at least 95 wt%, still more preferably at least 99 wt%. Thus, the heat transfer element can be formed substantially or even completely by the expanded graphite structure, which can itself consist to at least 95 wt%, preferably to at least 97 wt%, more preferably to at least 99,5 wt% of graphite. Thus, by using a respectively high amount of expanded graphite forming the flexible structure, a large heat transfer coefficient from the heating device to the object to be heated can be realized, so that a high heat transfer efficiency is achievable.

The flexible structure can further comprise a glass textile structure, preferably comprising glass silk. The glass textile structure can be woven or non-woven. The glass textile structure can for example comprise a fabric, a braid or a felt. The glass textile structure can extend, preferably continuously, along a longitudinal axis of the flexible structure, i.e. in an axial direction of the flexible structure.

In this case, the expanded graphite structure can form at least one seam, preferably at least two seams, more preferably a plurality of seams provided in the glass textile structure. The seam or seams can extend along the longitudinal axis of the flexible structure. The seam or seams can strengthen the overall configuration of the flexible structure, for example by fixing the glass textile structure in the predetermined shape and configuration.

The flexible structure can consist to at least 90 wt% of glass textile structure, preferably at least 95 wt%, more preferably at least 99 wt%, still more preferably at least 99.5 wt%, even more preferably at least 99.9 wt%. Thus, the heat transfer element can be formed substantially by the glass textile structure. In this embodiment, the flexible structure can consist to less than 1 wt% of expanded graphite, preferably less than 0.5 wt%, more preferably less than 0.2 wt%, less than 0.1 wt%. Thus, by using a respectively high amount of glass textile structure forming the flexible structure, the heat transfer coefficient from the heating device to the object to be heated can be reduced, so that the trace heating system can be used for tracing of temperature sensitive media.

In an embodiment, in particular an embodiment in which the expanded graphite structure has a tubular shape, the glass textile structure can be provided between layers of the expanded graphite structure, e.g. within the cavity of the tubular expanded graphite structure.

By using a high amount of glass textile structure, the flexible structure can be used in particular for transferring heat to temperature sensitive substances since a high amount of glass textile structure leads to a reduction of the heat transfer coefficient from the heating device to the surface of the object to be heated.

According to another aspect, the present invention provides a trace heating system for controlling heat transfer, preferably for controllably heating an object be heated. The system comprises a heating device for containing a heat carrier, an object to be heated for containing a substance, and a flexible structure of the type described above. The flexible structure is in direct contact with the heating device and is in direct contact with the object to be heated so as to transfer heat from the heating device to the object to be heated. More precisely, the flexible structure can be in direct contact with the heating device and/or the object to be heated thus forming at least one longitudinal contact surface area section, respectively.

The trace heating system can comprise at least one fastening means encompassing the heating device, the object to be heated and the flexible structure arranged there between so as to firmly connect the heating device, the object to be heated and the flexible structure with one another, and to fixedly hold the heating device, the object to be heated and the flexible structure in a predetermined position relative to one another, and to apply a force to the heating device, the object to be heated and the flexible structure firmly pressing the heating device, the object to be heated and the flexible structure together.

The at least one fastening means can be a tensioning strap, preferably a stainless steel tensioning strap, or can comprise any other fastening material.

According to another aspect, the present invention relates to a method of controlling heat transfer between a heating device and an object to be heated, preferably in a trace heating system of the type described above. The method comprises the steps of:
- providing heat by the heating device, preferably by a heat carrier contained in the heating device; and
- transferring the heat from the heating device via a flexible structure to the object to be heated,
wherein the flexible structure is a flexible structure of the type described above, which is arranged between the heating device and the object to be heated.

Even though some of the features, functions, embodiments, technical effects and advantages have been described with regard to the use of the flexible structure, the flexible structure as such, the trace heating system or the method, it will be understood that these features, functions, embodiments, technical effects and advantages can also apply accordingly to each of the use, the flexible structure as such, the trace heating system and/or the method accordingly.

### Brief description of the drawings

For a better understanding of embodiments of the invention and to show how the same may be carried into effect, reference will now be made, by way of example, to the accompanying drawings in which like numerals designate corresponding elements or sections throughout.

In the accompanying drawings:
Fig. 1 shows a schematic cross sectional view of a flexible structure according to an embodiment of the invention.
Fig. 2 shows a schematic side view of a flexible structure according to an embodiment of the invention.
Fig. 3 shows a schematic side view of the flexible structure according to another embodiment of the invention.
Fig. 4 shows a schematic cross sectional view of the flexible structure of Fig. 1 arranged in a trace heating system according to an embodiment of the invention.

### Detailed description of the drawings

Examples of embodiments of the present invention will be explained in more detail by virtue of the following embodiments illustrated in the figures and/or described below.

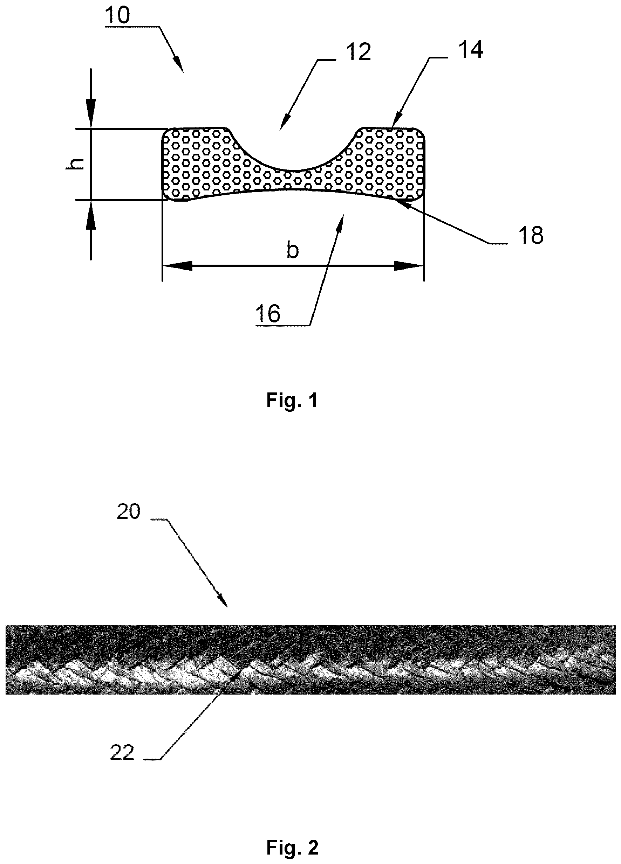

Fig. 1 shows a cross sectional view of a flexible structure 10 for controllably transferring heat. In the embodiment shown in Fig. 1, the flexible structure 10 is completely formed of expanded graphite. The flexible structure 10 has a substantially rectangular cross sectional area having a width b of 20 mm and a height h of 6 mm.

The flexible structure 10 of the embodiment shown in Fig. 1 is provided with a first recess 12 formed in a first surface area portion 14 of the flexible structure 10. The first recess 12 forms a first concave section configured to receive a portion of a heat carrier pipe containing the heat carrier. In the shown embodiment, the first concave section defines an arc of a circle having a radius of 21.3 mm.

The flexible structure 10 is further provided with a second recess 16 formed in a second surface area portion 18 of the flexible structure 10, wherein the second surface area portion 18 is arranged opposite to the first area portion 14. The second recess 16 forms a second concave section configured to receive a portion of a pipe to be heated containing the substance to be heated. In the shown embodiment, the second concave section defines an arc of a circle having a radius of more than 33.7 mm.

Fig. 2 shows flexible structure 20 according to another embodiment in a side view. As can be seen from Fig. 2, the flexible structure 20 has a longitudinal shape and is formed by braided expanded graphite 22. In this particular embodiment, the flexible structure 10 is formed completely by the continuous expanded graphite textile structure 22, thus achieving a heat transfer element having a high thermal conductivity that can provide a high heat transfer coefficient between adjacent structures. In contrast to the embodiment of Fig. 1, the flexible structure 20 of Fig. 2 is not provided with any recess. However, in further embodiments one or more recesses can be pre-formed in the flexible structure 20 of Fig. 2.

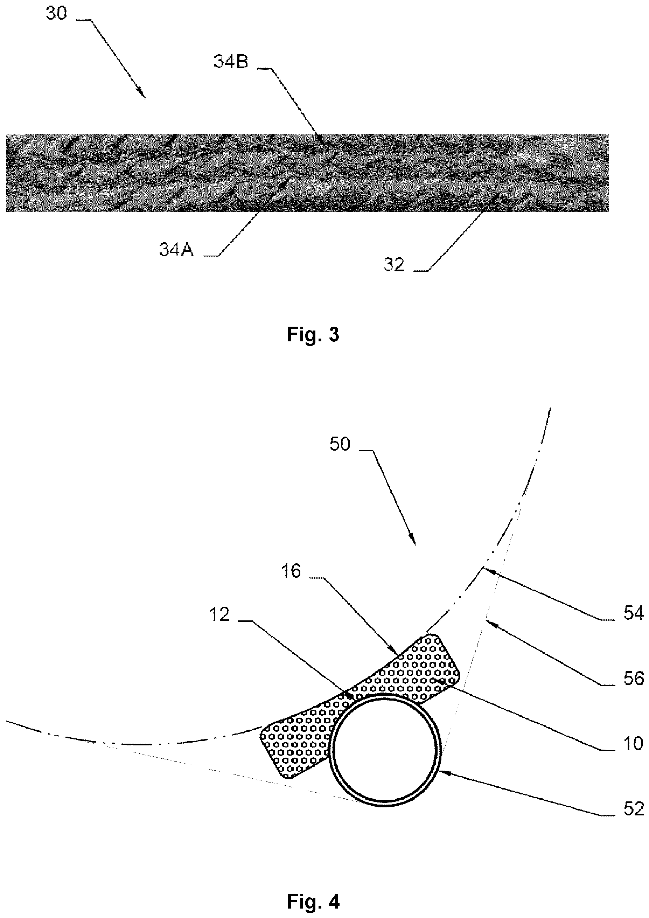

Fig. 3 shows flexible structure 30 according to still another embodiment in a side view. In the embodiment of Fig. 3, the flexible structure 30 comprises a braided glass silk structure 32 forming the main longitudinal body of the flexible structure 30. The expanded graphite forms two continuous seams 34A, 34B which extend in the axial direction, i.e. along the longitudinal axis of the main body of the flexible structure 30. The two seams 34A, 34B are arranged substantially in the middle of the main body of the flexible structure 30 parallel to one another. The two seams 24A, 34B strengthen the braided glass silk structure 32 and support maintenance of the shape and dimensions of the flexible structure 30. Due to the high amount of glass silk, which has a relatively low thermal conductivity, the embodiment of Fig. 3 has a substantially lower thermal conductivity than the embodiment of Fig. 2 and can thus be used in particular for transferring heat to temperature sensitive substances.

Fig.4 shows a cross sectional view of a trace heating system 50 comprising a heating device in form of a heated pipe 52 containing a heat carrier (not shown), an object to be heated in form of a pipe to be heated 54 containing a substance to be heated (not shown) and the flexible structure 10 according to the embodiment of Fig. 1, which flexible structure is arranged between the heated pipe 52 and the pipe to be heated 54. The heated pipe 52 has a circular shape with a radius of 21.3 mm. The heated pipe 52 contains heated oil with a temperature of 200 °C as a heat carrier. The pipe to be heated 54 contains bitumen as a substance to be heated, which is to be heated in order to maintain a sufficient viscosity for allowing transportation of the bitumen through the pipe system.

The heated pipe 52, the pipe to be heated 54 and the flexible structure 10 are encompassed and held tightly together by a tensioning strap 56.

The flexible structure 10 is in direct contact with both the heated pipe 52 and the pipe to be heated 54. More precisely, a section of the heated pipe 52 is arranged in the first recess 12 and thus abuts the first concave section of the flexible structure 10. Further, a section of the pipe to be heated 54 is arranged in the second recess 16 and thus abuts the second concave section of the flexible structure 10. At least along the surface area portion in which the flexible structure 10 is in direct contact with both the heated pipe 52 and the pipe to be heated 54, the heated pipe 52, the pipe to be heated 54 and the flexible structure 10 are substantially parallel to each other. By means of the flexibility and the pre-formed recesses 12, 16 of the flexible structure 10, the shape of the flexible structure 10 is adapted precisely to the shape of the heated pipe 52 and the pipe to be heated 54. Thus, an optimum heat transfer efficiency is achievable by using the flexible structure 10 as a heat transfer element. Moreover, the shown trace heating system 50 is easy to assemble and easy to disassemble without residue as no cement or adhesive is needed for the system.

### List of reference signs

- 10: flexible structure according to a first embodiment
- 12: first recess
- 14: first surface area portion
- 16: second recess
- 18: second surface area portion
- a: outer region of the bottom portion
- b: center of the bottom portion
- 20: flexible structure according to a second embodiment
- 22: braided expanded graphite structure
- 30: flexible structure according to a third embodiment
- 32: glass silk structure
- 34A: expanded graphite seam
- 34B: expanded graphite seam
- 50: trace heating system
- 52: heated pipe
- 54: pipe to be heated
- 56: tensioning strap

## Claims

1. Flexible structure (10, 20, 30) for transferring heat between a heating device (52) and an object to be heated (54) in a trace heating system, the flexible structure having a longitudinal shape with a longitudinal axis and **characterised in that** it comprises an expanded graphite structure which forms at least a portion of a surface area of the flexible structure (10, 20, 30).

2. Flexible structure (10) according to claim 1, comprising a first surface area portion (14) which is provided with a first recess (12) forming a first concave section configured to receive a portion of the heating device containing a heat carrier.

3. Flexible structure (10) according to claim 1 or 2, comprising a second surface area portion (18) which is provided with a second recess (16) forming a second concave section configured to receive a portion of the object to be heated containing a substance.

4. Flexible structure (10, 20, 30) according to at least one of claims 1 to 3, wherein the expanded graphite structure is a woven or non-woven textile, and/or wherein the expanded graphite structure has a tubular shape.

5. Flexible structure (10, 20) according to at least one of claims 1 to 4, wherein the flexible structure (10, 20) consists to at least 80 wt% of graphite, preferably at least 90 wt%, more preferably at least 95 wt%, still more preferably at least 99 wt%.

6. Flexible structure (10, 30) according to at least one of claims 1 to 5, further comprising a glass textile structure, preferably comprising glass silk.

7. Flexible structure (10, 30) according to claim 6, wherein the expanded graphite structure forms at least one seam (34A, 34B) provided in the glass textile structure, the seam (34A, 34B) preferably extending along the longitudinal axis of the flexible structure (10, 30).

8. Trace heating system (50) for controlling heat transfer, the system (50) comprising
a heating device (52), preferably containing a heat carrier,
an object to be heated (54), preferably containing a substance to be heated, and
a flexible structure (10, 20, 30) according to at least one of claims 1 to 7,
wherein the flexible structure (10, 20, 30) is in direct contact with the heating device and is in direct contact with the object to be heated so as to transfer heat from the heating device to the object to be heated.

9. Trace heating system (50) according to claim 8, further comprising at least one fastening means (56) encompassing the heating device (52), the object to be heated (54) and the flexible structure (10, 20, 30) arranged there between so as to firmly connect the heating device (52), the object to be heated (54) and the flexible structure (10, 20, 30) with one another and to fixedly hold the heating device (52), the object to be heated (54) and the flexible structure (10, 20, 30) in a predetermined position relative to one another.

10. Method of controlling heat transfer between a heating device (52) and an object to be heated (54) in a trace heating system, preferably in a trace heating system (50) according to claim 8 or 9, the method comprising the steps of:
- providing heat by the heating device (52); and
- transferring the heat from the heating device (52) via a flexible structure (10, 20, 30) to the object to be heated (54), wherein the flexible structure (10, 20, 30) is a flexible structure according to at least one of claims 1 to 7.

11. Use of a flexible structure (10, 20, 30) comprising expanded graphite for transferring heat from a heating device (52) to an object to be heated (54) in a trace heating system, the flexible structure having a longitudinal shape with a longitudinal axis and comprising an expanded graphite structure which forms at least a portion of a surface area of the flexible structure (10, 20, 30).

12. Use according to claim 11, wherein the heating device (52) is a cylindrical heating device, preferably a pipe or a corrugated hose; and/or
wherein the object to be heated (54) is a pipe, a vessel, a tank, a valve, a pump, a container, a pipe fitting and/or an instrument.

13. Use according to claim 11 or 12,
wherein the heating device (52) contains a heat carrier comprising a fluid, preferably comprising heated steam, heated oil or heated water; and/or
wherein the object to be heated (54) contains a substance comprising a fluidic substance, preferably comprising bitumen.

14. Use according to at least one of claims 11 to 13, wherein the flexible structure (10, 30) further comprises a glass textile structure, preferably comprising glass silk.

## Patentansprüche

1. Flexible Struktur (10, 20, 30) zum Übertragen von Wärme zwischen einer Heizvorrichtung (52) und einem zu erwärmenden Gegenstand (54) in einem Begleitheizungssystem, wobei die flexible Struktur eine längliche Form mit einer Längsachse aufweist,
**dadurch gekennzeichnet, dass**
die flexible Struktur eine expandierte Graphitstruktur aufweist, die mindestens einen Teil einer Oberfläche der flexiblen Struktur (10, 20, 30) bildet.

2. Flexible Struktur (10) nach Anspruch 1, mit einem ersten Oberflächenbereich (14), in dem eine erste Vertiefung (12) ausgebildet ist, die einen ersten konkaven Abschnitt bildet, der dafür konfiguriert ist, einen Teil der Heizvorrichtung aufzunehmen, die einen Wärmeträger enthält.

3. Flexible Struktur (10) nach Anspruch 1 oder 2, mit einem zweiten Oberflächenbereich (18), in dem eine zweite Vertiefung (16) ausgebildet ist, die einen zweiten konkaven Abschnitt bildet, der dafür konfiguriert ist, einen Teil des zu erwärmenden Gegenstands aufzunehmen, der eine Substanz enthält.

4. Flexible Struktur (10, 20, 30) nach mindestens einem der Ansprüche 1 bis 3, wobei die expandierte Graphitstruktur ein Webstoff oder ein Vliesstoff ist und/oder wobei die expandierte Graphitstruktur eine rohrförmige Form hat.

5. Flexible Struktur (10, 20) nach mindestens einem der Ansprüche 1 bis 4, wobei die flexible Struktur (10, 20) zu mindestens 80 Gew.-%, vorzugsweise zu mindestens 90 Gew.-%, bevorzugter zu mindestens 95 Gew.-%, noch bevorzugter zu mindestens 99 Gew.-%, aus Graphit besteht.

6. Flexible Struktur (10, 30) nach mindestens einem der Ansprüche 1 bis 5, ferner mit einer Glastextilstruktur, die vorzugsweise Glasseide enthält.

7. Flexible Struktur (10, 30) nach Anspruch 6, wobei die expandierte Graphitstruktur mindestens eine Naht (34A, 34B) in der Glastextilstruktur bildet, wobei sich die Naht (34A, 34B) vorzugsweise entlang der Längsachse der flexiblen Struktur (10, 30) erstreckt.

8. Begleitheizungssystem (50) zum Steuern einer Wärmeübertragung, wobei das System (50) aufweist:
eine Heizvorrichtung (52), die vorzugsweise einen Wärmeträger enthält;
einen zu erwärmenden Gegenstand (54), der vorzugsweise eine zu erwärmende Substanz enthält; und
eine flexible Struktur (10, 20, 30) nach mindestens einem der Ansprüche 1 bis 7,
wobei die flexible Struktur (10, 20, 30) in direktem Kontakt mit der Heizvorrichtung und in direktem Kontakt mit dem zu erwärmenden Gegenstand steht, um Wärme von der Heizvorrichtung auf den zu erwärmenden Gegenstand zu übertragen.

9. Begleitheizungssystem (50) nach Anspruch 8, ferner mit mindestens einer die Heizvorrichtung (52), den zu erwärmenden Gegenstand (54) und die dazwischen angeordnete flexible Struktur (10, 20, 30) umschließenden Befestigungseinrichtung (56) zum festen Verbinden der Heizvorrichtung (52), des zu erwärmenden Gegenstands (54) und der flexiblen Struktur (10, 20, 30) miteinander und zum festen Halten der Heizvorrichtung (52), des zu erwärmenden Gegenstands (54) und der flexiblen Struktur (10, 20, 30) in einer vorgegebenen Position relativ zueinander.

10. Verfahren zum Steuern einer Wärmeübertragung zwischen einer Heizvorrichtung (52) und einem zu erwärmenden Gegenstand (54) in einem Begleitheizungssystem, vorzugsweise in einem Begleitheizungssystem (50) nach Anspruch 8 oder 9, wobei das Verfahren die Schritte aufweist:
Bereitstellen von Wärme durch die Heizvorrichtung (52); und
Übertragen der Wärme von der Heizvorrichtung (52) über eine flexible Struktur (10, 20, 30) auf den zu erwärmenden Gegenstand (54), wobei die flexible Struktur (10, 20, 30) eine flexible Struktur nach mindestens einem der Ansprüche 1 bis 7 ist.

11. Verwendung einer flexiblen Struktur (10, 20, 30), die expandiertes Graphit aufweist, zum Übertragen von Wärme von einer Heizvorrichtung (52) zu einem zu erwärmenden Gegenstand (54) in einem Begleitheizungssystem, wobei die flexible Struktur eine längliche Form mit einer Längsachse aufweist und eine expandierte Graphitstruktur aufweist, die mindestens einen Teil eines Oberflächenbereichs der flexiblen Struktur (10, 20, 30) bildet.

12. Verwendung nach Anspruch 11, wobei die Heizvorrichtung (52) eine zylindrische Heizvorrichtung, vorzugsweise ein Rohr oder ein Wellschlauch, ist, und/oder
wobei der zu erwärmende Gegenstand (54) ein Rohr, ein Gefäß, ein Tank, ein Ventil, eine Pumpe, ein Behälter, ein Rohranschlussstück und/oder ein Instrument ist.

13. Verwendung nach Anspruch 11 oder 12,
wobei die Heizvorrichtung (52) einen Wärmeträger mit einem Fluid, vorzugsweise mit erhitztem Dampf, erhitztem Öl oder erhitztem Wasser, enthält, und/oder
wobei der zu erwärmende Gegenstand (54) eine Substanz ist, die eine fluidische Substanz aufweist, die vorzugsweise Bitumen aufweist.

14. Verwendung nach mindestens einem der Ansprüche 11 bis 13, wobei die flexible Struktur (10, 30) ferner eine Glastextilstruktur aufweist, die vorzugsweise Glasseide aufweist.

## Revendications

1. Structure flexible (10, 20, 30) pour transférer de chaleur entre un dispositif chauffant (52) et un objet à chauffer (54) dans un système de traçage thermique, la structure flexible présentant une forme longitudinale avec un axe longitudinal et **caractérisée en ce qu'**elle comprend une structure de graphite expansé qui forme au moins une partie d'une surface de la structure flexible (10, 20, 30).

2. Structure flexible (10) selon la revendication 1, comprenant une première partie de surface (14) pourvue d'un premier évidement (12) formant une première section concave configurée pour recevoir une partie du dispositif de chauffage contenant un caloporteur.

3. Structure flexible (10) selon la revendication 1 ou 2, comprenant une deuxième partie de surface (18) pourvue d'un second évidement (16) formant une seconde section concave configurée pour recevoir une partie de l'objet à chauffer contenant une substance.

4. Structure flexible (10, 20, 30) selon au moins une des revendications 1 à 3, dans laquelle la structure de graphite expansé est un textile tissé ou non tissé, et/ou dans laquelle la structure de graphite expansé présente une forme tubulaire.

5. Structure flexible (10, 20) selon au moins une des revendications 1 à 4, dans laquelle la structure flexible (10, 20) consiste en au moins 80 % en poids de graphite, de préférence au moins 90 % en poids, plus préférablement au moins 95 % en poids, plus préférablement encore au moins 99 % en poids.

6. Structure flexible (10, 30) selon au moins une des revendications 1 à 5, comprenant en outre une structure de textile de verre, comprenant de préférence de la soie de verre.

7. Structure flexible (10, 30) selon la revendication 6, dans laquelle la structure de graphite expansé forme au moins une couture (34A, 34B) prévue dans la structure textile de verre, la couture (34A, 34B) s'étendant de préférence selon l'axe longitudinal de la structure flexible (10, 30).

8. Système de traçage thermique (50) pour contrôler un transfert thermique, le système (50) comprenant
un dispositif de chauffage (52), contenant de préférence un caloporteur,
un objet à chauffer (54), contenant de préférence une substance à chauffer, et
une structure flexible (10, 20, 30) selon au moins une des revendications 1 à 7, dans lequel la structure flexible (10, 20, 30) est en contact direct avec le dispositif de chauffage et est en contact direct avec l'objet à chauffer pour transférer de la chaleur du dispositif de chauffage à l'objet à chauffer.

9. Système de traçage thermique (50) selon la revendication 8, comprenant en outre un moyen de fixation (56) entourant le dispositif de chauffage (52), l'objet à chauffer (54) et la structure flexible (10, 20, 30) disposée entre eux pour solidariser le dispositif de chauffage (52), l'objet à chauffer (54) et la structure flexible (10, 20, 30) les uns aux autres et pour maintenir fixement le dispositif de chauffage (52), l'objet à chauffer (54) et la structure flexible (10, 20, 30) dans une position prédéterminée les uns par rapport aux autres.

10. Procédé de contrôle de transfert thermique entre un dispositif de chauffage (52) et un objet à chauffer (54) dans un système de traçage thermique, de préférence dans un système de traçage thermique (50) selon la revendication 8 ou 9, ce procédé comprenant les étapes :
- fournir de la chaleur par le dispositif de chauffage (52) ; et
- transférer la chaleur du dispositif de chauffage (52), par l'intermédiaire d'une structure flexible (10, 20, 30), à l'objet à chauffer (54), dans lequel la structure flexible (10, 20, 30) est une structure flexible selon au moins une des revendications 1 à 7.

11. Utilisation d'une structure flexible (10, 20, 30) comprenant du graphite expansé pour transférer de la chaleur d'un dispositif de chauffage (52) à un objet à chauffer (54) dans un système de traçage thermique, la structure flexible présentant une forme longitudinale avec un axe longitudinal et comprenant une structure de graphite expansé qui forme au moins une partie d'une surface de la structure flexible (10, 20, 30).

12. Utilisation selon la revendication 11, dans laquelle le dispositif de chauffage (52) est un dispositif de chauffage cylindrique, de préférence une canalisation ou un tuyau cannelé ; et/ou
dans laquelle l'objet à chauffer (54) est une canalisation, une cuve, un réservoir, une soupape, une pompe, un récipient, un accessoire de canalisation et/ou un instrument.

13. Utilisation selon la revendication 11 ou 12,
dans laquelle le dispositif de chauffage (52) contient un caloporteur comprenant un fluide, comprenant de préférence de la vapeur chaude, de l'huile chaude ou de l'eau chaude; et/ou
dans laquelle l'objet à chauffer (54) contient une substance comprenant une substance fluide, de préférence comprenant du bitume.

14. Utilisation selon au moins une des revendications 11 à 13, dans laquelle la structure flexible (10, 30) comprend en outre une structure textile de verre, de préférence comprenant de la soie de verre.
